# EUROPÄISCHE PATENTSCHRIFT

(11) **EP 1 110 017 B1**
(45) Veröffentlichungstag und Bekanntmachung des Hinweises auf die Patenterteilung: **08.05.2002**
(21) Anmeldenummer: 99942866.7
(22) Anmeldetag: 13.08.1999
(51) Int. Cl.: F16J 15/44

(54) **REIBUNGSARME DICHTUNG und hydraulikzylinder**
LOW-FRICTION SEAL and hydraulic cylinder
ELEMENT D'ETANCHEITE A FAIBLE FROTTEMENT et cylindre hydraulique

(30) Priorität: 12.09.1998 DE 19841830
(43) Veröffentlichungstag der Anmeldung: 27.06.2001
(73) Patentinhaber: Herbert Hänchen GmbH & Co. KG., 73760 Ostfildern (DE)
(72) Erfinder: BUSSE, Herbert, D-70439 Stuttgart (DE); FABROWSKY, Hans-Dieter, D-73765 Neuhausen a.d.F. (DE)
(74) Vertreter: Hössle, Markus, Dipl.-Phys.
(86) Internationale Anmeldenummer: EP9905952
(87) Internationale Veröffentlichungsnummer: WO0015983

(56) Entgegenhaltungen:
- EP-A- 0 043 918
- EP-A- 0 362 510
- EP-A- 0 623 768
- DE-A- 1 425 506
- DE-A- 1 804 557
- DE-A- 4 242 213
- DE-U- 9 409 779
- FR-A- 2 068 325
- US-A- 3 909 015

## Beschreibung

Die vorliegende Erfindung betrifft eine reibungsarme Dichtung für Hoch- und Niederdruck mit einem Dichtring gemäß dem Oberbegriff des Anspruches 1 sowie einen Hydraulikzylinder gemäß dem Oberbegriff des Anspruches 14.

Aus der deutschen Offenlegungsschrift 18 04 557 ist eine Abdichtung eines Wellendurchtritts durch ein Gehäuse bekannt, bei der zur Vermeidung von durch einen unrunden Lauf der Welle verursachten Verschleißerscheinungen eine Anordnung des Dichtrings mittels dreier fest eingespannter gummielastischer Lagerringe in einer konzentrisch zur Welle verlaufenden Ringnut vorgesehen ist, wodurch eine axiale und radiale Verschiebbarkeit des verschleißfesten Dichtrings in vorgegebenen Grenzen erreicht wird. Die bekannte Dichtungsanordnung dient zur Abdichtung eines Wellenaustritts, d.h. zweier Oberflächen, die nicht translatorisch, sondern ausschließlich in Rotation relativ zueinander bewegt werden, wobei die Dichtung einen Austritt von drucklosem Schmieröl verhindern soll. Bei derartigen Dichtungen berührt der Dichtring die abzudichtende Fläche. In der bekannten Dichtung wird der Dichtring durch den unrunden Lauf der Kurbelwelle mechanisch zu Radialbewegungen veranlaßt.

Aus der EP 0 043 918 B1 ist eine gattungsgemäße reibungsarme Dichtung bekannt. Bei einer gattungsgemäßen reibungsarmen Dichtung handelt es sich um eine sogenannte berührungslose, d.h. fast reibungsfreie Dichtung, bei der die Abdichtung über einen zwischen Dichtring und abzudichtender Stelle ausgebildeten Dichtspalt erfolgt, indem sich die viskose Wirkung der darin befindlichen Flüssigkeit bemerkbar macht und für eine Abdichtung sorgt. Aufgrund der berührungslosen Anordnung liegt im Gegensatz zu konventionellen Dichtungen theoretisch Reibungsfreiheit vor, tatsächlich herrscht jedoch eine aus der Adhäsion der Flüssigkeit resultierende Restreibung. Aus diesem Grunde wird nachfolgend durchgehend von einer "reibungsarmen" Dichtung gesprochen.

Die bekannte Dichtung umfaßt einen formstabilen Dichtring, der in einer Nut einer von zwei gegeneinander abzudichtenden und relativ zueinander bewegten Flächen mit axialem und radialem Spiel aufgenommen ist. Mit seinem aus der Nut herausragenden Umfang liegt der Dichtring einer anderen abzudichtenden Fläche mit Gleitpassung gegenüber. Des weiteren sind bei der bekannten Dichtung zwischen der druckraumseitigen Nut-Seitenwand und dem Dichtring Abstandshaltermittel vorgesehen, die eine unbehinderte Druckausbreitung zum Nutengrund hin zulassen, und die aus der Nut herausragende zylindrische Oberfläche des Dichtringes liegt an der anderen abzudichtenden Fläche mit Gleitsitz an und enthält eine Mehrzahl von unter Längsabständen zueinander angeordneten kleinen Ringnuten. Außerdem ist zur Ergänzung der Abdichtfunktion einer die druckraumferne Nut-Seitenwand beaufschlagenden Dichtkante ein elastischer Dichtring im Bereich der Dichtkante angeordnet. Mit der bekannten Dichtung wird erreicht, daß das Druckmittel vom Druckraum her zwischen den Abstandshaltern hindurch bis zum Nutengrund dringt und dabei versucht, an der Dichtkante vorbei zu entweichen. Daran wird das Druckmittel jedoch gehindert, weil der Dichtring an der Abstandshalterseite eine größere druckbeaufschlagte Fläche besitzt als an der gegenüberliegenden Dichtkantenseite und somit von dem sich innerhalb der Nut unbehindert ausbreitenden Druck an der Dichtkante anliegend gehalten wird. Der Dichtring ist folglich innerhalb der mit Druckmittel beaufschlagten Nut im wesentlichen schwimmend gehalten. Um eine verminderte Reibung zu erhalten, übernimmt die bekannte Dichtung keinerlei Führungsaufgaben. Da sich das in dem aus einem Passungsspiel ergebenden engen Spalt zwischen der abzudichtenden Fläche, beispielsweise einer Kolbenstange, und dem Umfang des Dichtringes ausbreitende Druckmittel vom Druckraum am Dichtring vorbei zu entweichen versucht, entstehen hydrodynamische Kräfte mit der Wirkung, daß sich das Druckmittel weitgehend gleichmäßig um die Kolbenstange herum zu verteilen und einen konzentrischen Spalt aufrechtzuerhalten versucht. Das Spiel zwischen Dichtring und Nut ist so groß, daß sich der Druck aus dem Ölraum, soweit er sich durch das Gleitspiel zwischen Führungsbuchse und Kolbenstange fortsetzt, unbehindert bis zum Nutengrund hin ausbreiten kann. Mit dieser bekannten Anordnung soll eine Verringerung insbesondere der druckabhängigen Reibungsverluste zwischen translatorisch zueinander bewegten Flächen sowie eine erhebliche Steigerung des Wirkungsgrades erreicht werden.

Ausgehend von diesem Stand der Technik liegt der Erfindung die Aufgabe zugrunde, eine Dichtung der eingangs genannten Art zu schaffen, bei der unter Beibehaltung der aus dem Stand der Technik bekannten vorteilhaften Wirkungen ein vereinfachter Aufbau gegeben ist. Des weiteren sollen bei der bereitzustellenden Dichtung die auf den Dichtring wirkenden Drücke derart sein, daß für den Dichtring auch Materialien mit einer größeren Dehnung verwendet werden können.

Zur Lösung dieser Aufgabe wird eine reibungsarme Dichtung mit den Merkmalen des Anspruches 1 sowie ein Hydraulikzylinder mit einer derartigen Dichtung mit den Merkmalen des Anspruches 14 vorgeschlagen.

Durch die erfindungsgemäße Anbringung von Mitteln zur Verhinderung einer Druckausbreitung zum Nutengrund zwischen der druckraumseitigen Nut-Seitenwand und dem Dichtring wird ein einfacherer Aufbau der reibungsarmen Dichtung erreicht, da nun nur zwischen der dem Druckraum näheren Nut-Seitenwand und dem Dichtring zusätzliche Elemente, nämlich die Mittel zur Verhinderung einer Druckausbreitung zum Nutengrund, vorgesehen sind. Im Gegensatz hierzu verfügt die aus dem Stand der Technik bekannte reibungsarme Dichtung zum einen über zwischen der druckraumseitigen Nut-Seitenwand und dem Dichtring vorgesehene Abstandshaltermittel, zum anderen über eine die druckraumferne Nut-Seitenwand beaufschlagende Dichtkante, in deren Bereich ein zusätzlicher elastischer Dichtring angeordnet ist.

In Abkehr von sämtlichen bei berührungslosen Dichtungen bisher angewandten Konzepten wird mit der Erfindung des weiteren der Weg beschritten, am Dichtring neue Druckverhältnisse zu schaffen. Da durch die Mittel zur Verhinderung einer Druckausbreitung zum Nutengrund eine Beaufschlagung des Nutengrunds durch Druckmittel nunmehr erfindungsgemäß unterbleibt, ist eine Ausbreitung des Druckmittels nur in dem engen Spalt zwischen der aus der Nut herausragenden zylindrischen Oberfläche des Dichtringes und der anderen abzudichtenden Fläche möglich. Dies hat zur Folge, daß an dem (quasi-formstabilen) Dichtring nur noch ein Innendruck auftritt, während bei der aus dem Stand der Technik bekannten Dichtung an dem Dichtring sowohl ein von der Druckbeaufschlagung des Nutengrundes her rührender Außendruck als auch ein Innendruck auftreten.

Diese neuen Druckverhältnisse haben zur Folge, daß sich der Dichtring verglichen mit dem Dichtring der aus der EP 0 043 918 B1 bekannten Dichtung anders verformt. Da bei der erfindungsgemäßen Lösung an dem Dichtring nur noch ein Innendruck vorherrscht, liegt keine (radiale) Verformung des Dichtringes in Richtung der abzudichtenden Fläche mehr vor, so daß bei der Bemaßung des Dichtspaltes zwischen der aus der Nut herausragenden Oberfläche des Dichtringes und der abzudichtenden Fläche eine Veränderung aufgrund einer Dichtringzusammenpressung nicht mehr berücksichtigt werden muß. Somit kann der Fertigungsdichtspalt nur wenige pm betragen, ohne daß die Funktionssicherheit durch Klemmen des Dichtrings an der bewegten Gegenfläche beeinträchtigt wird, selbst bei ungewollten Drucküberhöhungen im System. Darüber hinaus bleibt dieser enge Dichtspalt an der druckfernen Seite des Dichtrings, unabhängig von der Höhe des Betriebsdrucks, im wesentlichen unverändert, da hier in Folge des Druckabbaus nur noch ein geringer Druck herrscht. Des weiteren führt die aufgrund eines Innendrucks gegebene Verformung des Dichtringes bei Verwendung von geeigneten Materialien zu einem größeren Einströmkonus zwischen Dichtring und abzudichtender Fläche, der die hydraulischen Zentrierkräfte an dem Dichtring verbessert, so daß sich ein berührungsfreies Dichtsystem mit sehr engem Dichtspalt und konzentrischer Lage der Dichtflächen zueinander ergibt. Mit diesen Parametern (keine Berührung der Dichtflächen, geringe Spalthöhe und konzentrische Lage) sind die wichtigsten Bedingungen für eine hochwertige Abdichtung zwischen zwei sich relativ zueinander bewegten Flächen erfüllt.

In Ausgestaltung der Erfindung umfassen die Mittel zur Verhinderung einer Druckausbreitung ein zwischen Dichtring und druckraumseitiger Nut-Seitenwand wirksames Abdichtelement.

Vorteilhafterweise umfassen die Mittel zur Verhinderung einer Druckausbreitung des weiteren ein das Abdichtelement in axialer Richtung beaufschlagendes Formteil.

Durch die Ausgestaltung der Mittel zur Verhinderung einer Druckausbreitung als ein Abdichtelement, das in axialer Richtung durch ein Formteil beaufschlagt wird, ist auf einfache Weise eine effektive und gut dichtende Überbrückung des Spaltes zwischen dem Dichtring und der druckraumseitigen Nut-Seitenwand gegeben.

In weiterer Ausgestaltung ist das Abdichtelement ein zweiter Dichtring, insbesondere aus extrusionsfestem Kunststoff, dessen Ringbreite kleiner ist als die Ringbreite des in der Nut aufgenommenen Dichtrings und dessen Dicke größer ist als die Breite des Spaltes zwischen dem Dichtring und der druckraumseitigen Nut-Seitenwand. Vorteilhafterweise ist das Formteil ein flexibler, insbesondere elastischer Ring, der vorzugsweise aus Kunststoff und/oder Gummi besteht. Dadurch wird erreicht, daß der das zweite Abdichtelement bildende Dichtring von dem flexiblen Ring gegen die abzudichtende Fläche in dem Spalt zwischen Dichtring und Nut-Seitenwand gepreßt wird (gummivorgespannte Dichtung).

Da der Dichtring eine Dicke aufweist, die größer ist als die Breite des Spaltes zwischen dem Dichtring und der druckraumseitigen Nut-Seitenwand, ist dadurch eine Abdichtung und somit eine Verhinderung einer Druckausbreitung zum Nutengrund gegeben.

In weiterer Ausgestaltung der Erfindung ist das Formteil in einer sich axial öffnenden Ringnut in der Nut-Seitenwand angeordnet und drückt das Abdichtelement gegen den Dichtring.

In anderer Ausgestaltung der Erfindung ist das Formteil in einer sich axial öffnenden Ringnut in dem Dichtring angeordnet und drückt das Abdichtelement gegen die Nut-Seitenwand.

In besonders vorteilhafter Ausgestaltung der Erfindung erfolgt bei Druckbeaufschlagung eine Verformung des Formteils derart, daß sich der Anpreßdruck des Formteils gegen das Abdichtelement erhöht. Dies wird beispielsweise dadurch erreicht, indem die Abmessungen der sich axial öffnenden Ringnut, in welcher das Formteil angeordnet ist, und des Formteils derart gewählt sind, daß bei sich ausbreitendem Druckmittel das Druckmittel in die Ringnut eindringen kann und dort das Formteil durch Druckbeaufschlagung derart verformt, daß es sich in axialer Richtung ausdehnt und somit den Anpreßdruck auf das Abdichtelement erhöht.

In weiterer vorteilhafter Ausgestaltung der Erfindung ist zwischen der druckraumfernen Nut-Seitenwand und dem Dichtring eine reibungsvermindernde Zwischenscheibe eingebracht. Durch eine derartige Zwischenscheibe wird die Zentrierwirkung bei einer Druckbeaufschlagung, d.h. eine koaxiale Selbstausrichtung des Dichtringes bezüglich der abzudichtenden Fläche (Kolbenstange), optimiert. Vorteilhafterweise ist die Zwischenscheibe zur Erzielung einer Reibungsverminderung beschichtet.

In anderer Ausgestaltung ist zwischen der druckraumfernen Nut-Seitenwand und dem Dichtring eine hydrostatische Entlastung vorgesehen, mittels welcher eine Zentrierung des Dichtringes erleichtert wird, da die druckbeaufschlagten Flächen so ausgelegt sind, daß nur eine geringe Anpreßkraft des Dichtrings an die Nut-Seitenwand erfolgt.

In besonders vorteilhafter Ausgestaltung der Erfindung sind bei zwei beidseitig von der Nut in axialer Richtung angeordneten Druckräumen zwischen beiden Nut-Seitenwänden und dem Dichtring Mittel zur Verhinderung einer Druckausbreitung zum Nutengrund vorgesehen und zwischen den Mitteln zur Verhinderung einer Druckausbreitung ist mindestens ein Ablaufkanal mit Rückschlagventil zur Ableitung von in die Nut gelangtem Druckmittel angeordnet. Das erfindungsgemäße Prinzip der Verhinderung einer Druckausbreitung zum Nutengrund wirkt sich insbesondere bei der Gestaltung eines Doppelzylinders, d.h. eines Zylinders mit abwechselnd beidseitiger Druckbeaufschlagung, aus. Während bei bekannten Doppelzylindern für eine effiziente Abdichtung im Bereich der Kolbenstangendurchführung zwei Dichtringe notwendig sind (vgl. EP 0 043 918 B1) ist es nunmehr möglich, eine Abdichtung mit nur einem Dichtring zu erzielen, der an jeder einem Druckraum zugewandten Nut-Seitenwand Mittel zur Verhinderung einer Druckausbreitung aufweist.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich erläutert.
- Figur 1: zeigt einen Längsschnitt durch einen Hydraulikzylinder im Bereich der an einem Ende angeordneten Kolbenstangen-Durchführung mit einer erfindungsgemäßen Dichtung.
- Figur 2a: zeigt in Ausschnittsdarstellung ein zweites Ausführungsbeispiel der erfindungsgemäßen Dichtung.
- Figur 2b: zeigt unterschiedliche Querschnittsformen des Formteils der erfindungsgemäßen Dichtung.
- Figur 3: zeigt die prinzipiellen Druckverhältnisse an einer aus dem Stand der Technik bekannten Dichtung.
- Figur 4: zeigt die prinzipiellen Druckverhältnisse an der erfindungsgemäßen Dichtung der Figur 1.
- Figur 5: zeigt als weiteres Ausführungsbeispiel die erfindungsgemäße Dichtung der Figur 1 mit einer reibungsvermindernden Zwischenscheibe.
- Figur 6: zeigt als weiteres Ausführungsbeispiel die erfindungsgemäße Dichtung der Figur 1 mit hydrostatischer Entlastung.
- Figur 7: zeigt noch ein weiteres Ausführungsbeispiel einer erfindungsgemäßen Dichtung anhand eines Längsschnittes durch einen Hydraulikzylinder, in dem zu beiden Seiten des Kolbens gleich hohe Drücke vorhanden sein können.

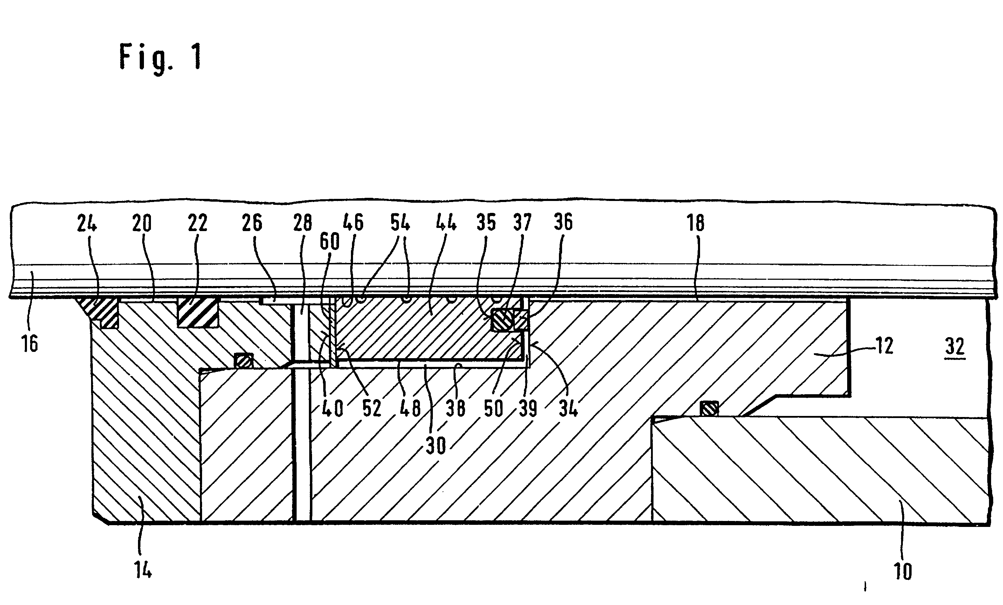

Entsprechend Figur 1 ist am Ende eines Hydraulikzylinders 10 eine in das Innere des Zylinders hineinragende Führungsbuchse 12 für eine Kolbenstange aufgesetzt und zusammen mit einem Deckelteil 14 durch nicht gezeigte Schrauben mit dem Zylinder verbunden. Eine Kolbenstange 16 des Hydraulikzylinders 10 kann mit Hilfe nicht gezeigter, in Nuten von Führungsbüchse 12 und Deckelteil 14 eingesetzter Führungsringe geführt sein. In einer Deckelbohrung 20 sind in Umfangsnuten ein Dichtring 22 sowie ein äußerer Abstreifring 24 angeordnet. Außerdem enthält der Deckelteil 14 eine Auffang-Ringnut 26 und eine davon ausgehende, nach außen geführte Leckölbohrung 28.

Eine vom äußeren Ende der Führungsbuchse 12 her eingebrachte zylindrische Bohrung bildet zusammen mit der benachbarten freien Stirnfläche des Deckelteils 14 eine Ringnut 30.

Der Hydraulikzylinder umfaßt zur Aufnahme des Druckmittels einen Druck- oder Ölraum 32. Der Druck- oder Ölraum 32 steht mit der Ringnut 30 über einen Gleitführungsspalt 18 zwischen der Führungsbuchse 12 und der Kolbenstange 16 in Verbindung.

In der Nut 30 ist ein Dichtring 44 aufgenommen, der aus Metall oder aus einem anderen formstabilen Material, beispielsweise Kunststoff mit derartigen Eigenschaften besteht. Der Dichtring 44 besitzt eine zylindrische Innenfläche 46, eine zylindrische Außenfläche 48 sowie im wesentlichen radial verlaufende Stirnflächen 50 bzw. 52. Der Dichtring 44 ist so bemessen, daß er die Kolbenstange 16 mit seiner zylindrischen Innenfläche 46 mit engem Gleitsitz umgibt und an seinen drei übrigen Außenflächen 48, 50, 52 allseitig mit Spiel in der Nut 30 untergebracht ist.

Das Spiel zwischen Dichtring 44 und Nut 30 ist gerade so groß, daß sich der Druck aus dem Ölraum 32, soweit er sich durch den Gleitführungsspalt 18 zwischen Führungsbuchse 12 und Kolbenstange 16 fortsetzt, zwischen der druckraumseitigen Nut-Seitenwand 34 und der druckraumseitigen Stirnfläche 50 des Dichtringes 44 zum Nutengrund 38 hin ausbreiten kann, wobei die radiale Bewegung der Kolbenstange innerhalb des Gleitsitzspiels nicht behindert wird.

Zur Verhinderung dieser Druckausbreitung sind zwischen der druckraumseitigen Nut-Seitenwand 34 und dem Dichtring 44 Mittel zur Verhinderung einer Druckausbreitung vorgesehen.

In dem in der Figur 1 dargestellten Ausführungsbeispiel handelt es sich dabei um eine gummivorgespannte Kunststoffdichtung 36, 37 aus einem ringförmigen Abdichtelement aus Kunststoff 36 und einem dieses beaufschlagenden flexiblen Formteil 37 aus Gummi. Das Abdichtelement 36 verfügt über eine Ringbreite, die kleiner ist als die Ringbreite des in der Nut 30 aufgenommenen Dichtrings 44, und über eine Dikke, die größer ist als die Breite des Spaltes 39 zwischen dem Dichtring 44 und der druckraumseitigen Nut-Seitenwand 34.

Die gummivorgespannte Kunststoffdichtung 36, 37 ist in einer sich axial öffnende Ringnut 35 in der druckraumseitigen Stirnfläche 50 des Dichtringes 44 angeordnet. In dem Nutengrund der Ringnut 35 ist dabei das Formteil 37 angeordnet, das das Abdichtelement 36 gegen die druckraumseitige Nut-Seitenwand 34 drückt.

Bei Beaufschlagung mit Druckmittel aus dem Druckraum 32 über den Gleitführungsspalt 18 tritt Druckmittel an das Abdichtelement 36 vorbei in die Ringnut 35 ein und beaufschlägt dort das flexible Formteil 37. Durch diese Beaufschlagung mit Druckmittel erfolgt eine Verformung des Formteils 37 derart, daß sich der Anpreßdruck des Formteils 37 gegen das Abdichtelement 36 erhöht und dieses somit stärker gegen die druckraumseitige Nut-Seitenwand 34 gepreßt wird. Der Kunststoffring des Abdichtelements besteht aus Materialien, die die Reibung an der Nut-Seitenwand 34 so minimieren, daß die hydraulische Zentrierung des Dichtrings zur Kolbenstange verbessert wird. Die Abdichtung zwischen Abdichtelement 36 und Ringnut 35 wird ebenfalls vom Formteil 37 übernommen. Durch die Verwendung einer derartigen gummivorgespannten Dichtung 36, 37 wird eine Abdichtung und Spaltüberbrückung zwischen dem Dichtring 44 und der druckraumseitigen Nut-Seitenwand 34 erreicht, die aufgrund einer geringen Reibung zwischen Führungsbuchse 12 und Dichtung 36 eine leichtgängige Ausrichtung des Dichtrings 44 ermöglicht.

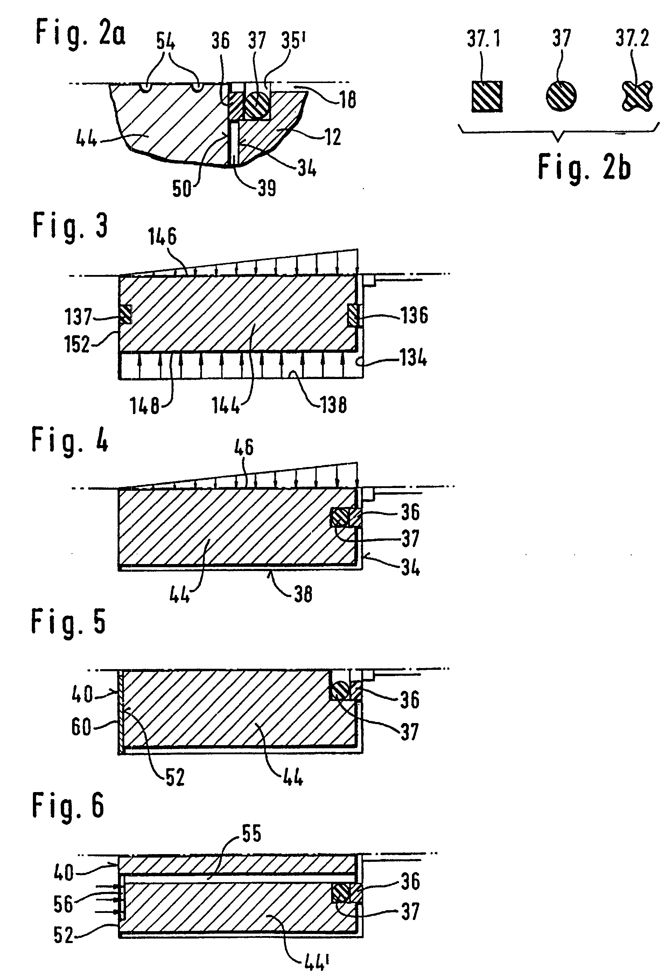

Dies hat zur Folge, daß sich das Druckmittel ausschließlich zwischen der zylindrischen Innenfläche 46 des Dichtringes 44 und der abzudichtenden Fläche der Kolbenstange 16 ausbreiten kann, wobei über die Länge des Dichtringes 44 eine nahezu kontinuierliche Abnahme des Druckes erfolgt. Dies wird nachfolgend unter Bezugnahme auf die Figuren 3 und 4 beschrieben.

Die zylindrische Innenfläche 46 ist mit mehreren, vorzugsweise unter gleichen Längsabständen zueinander angeordneten kleinen Ringnuten 54 versehen.

Figur 2 zeigt eine andere Ausführungsform der Mittel 36, 37 zur Verhinderung einer Druckausbreitung zum Nutengrund 38.

Bei der in Figur 2 ausschnittsweise dargestellten Ausführungsform ist die sich axial öffnende Ringnut 35' in der Führungsbuchse 12 zu der druckraumseitigen Nut-Seitenwand 34 hin öffnend ausgebildet. Darüber hinaus steht die Ringnut 35' in Verbindung mit den Gleitführungsspalt 18. Wie bereits vorstehend unter Bezugnahme auf Figur 1 erläutert, ist das Abdichtelement 36 in dem Spalt 39 zwischen dem Dichtring 44 und der druckraumseitigen Nut-Seitenwand überbrückend in der Ringnut 35' angeordnet, wobei in dem Nutengrund der Ringnut 35' das Formteil 37 untergebracht ist, das das Abdichtelement 36 beaufschlägt und gegen die druckraumseitige Stirnwand 50 des Dichtringes 44 drückt.

Bei Druckbeaufschlagung dringt Druckmittel über den Gleitführungsspalt 18 in die Ringnut 35' ein und verformt dort das flexible Formteil 37 in der vorstehend beschriebenen Weise, wodurch eine Erhöhung des Anpreßdrucks des Abdichtelementes 36 an die abzudichtende Stirnfläche 50 des Dichtringes 44 erfolgt, bei gleichzeitiger Abdichtung der Nahtstelle Abdichtelement 36 und Ringnut 35'.

Figur 2b zeigt neben dem in den Ausführungsbeispielen der Figuren 1 und 2a verwendeten Formteil 37 mit kreisrundem Querschnitt zwei weitere mögliche Querschnittsformen 37.1 und 37.2.

Die an dem Dichtring 44 auftretenden Druckverhältnisse sind im Vergleich zu den im Stand der Technik auftretenden Druckverhältnissen in schematischer und prinzipieller Weise in den Figuren 3 und 4 veranschaulicht. Figur 3 zeigt in seitlicher Schnittdarstellung einen Dichtring 144, wie er beispielsweise aus der eingangs zitierten EP 0 043 918 B1 bekannt ist. Dieser Dichtring 144 weist zu der druckraumseitigen Nut-Seitenwand 134 Abstandshalterelemente 136 auf, so daß eine ungehinderte Druckausbreitung zum Nutengrund 138 hin möglich ist. An seiner druckraumfernen Stirnfläche 152 weist der Dichtring 144 ein Abdichtelement 137 auf. Aufgrund der ungehinderten Druckausbreitung zum Nutengrund 138 ist die zum Nutengrund weisende zylindrische Außenfläche 148 des Dichtringes 144 über die gesamte Länge des Dichtringes 144 konstant druckbeaufschlagt. An der zylindrischen Innenfläche 146 liegt ebenfalls eine Druckbeaufschlagung des Dichtringes 144 vor aufgrund des zwischen den Dichtring 144 und die abzudichtende Fläche eindringenden Druckmittels. Dieser Druck nimmt jedoch über die Länge des Dichtringes 144 nahezu kontinuierlich ab. Aufgrund der somit gegebenen entgegengesetzt wirkenden Kräfte resultiert eine Konizität des im Querschnitt ursprünglich rechteckigen Dichtringes, indem der Dichtring 144 entlang seiner zylindrischen Außenfläche 148 zu seinem druckraumfernen Ende hin zunehmend eingedrückt ist.

Demgegenüber gestalten sich die Druckverhältnisse bei der erfindungsgemäßen Dichtung wie in Figur 4 dargestellt, wonach aufgrund der zwischen Dichtring 44 und druckraumseitiger Nut-Seitenwand 34 vorgesehenen Mittel 36, 37 zur Verhinderung einer Druckausbreitung zum Nutengrund 38 eine Druckbeaufschlagung des Dichtringes 44 ausschließlich an dessen zylindrischer Innenfläche 46 vorliegt. Aus dieser Druckbeaufschlagung resultiert wiederum eine Konizität des Dichtringes 44 mit jedoch gegenüber der aus dem Stand der Technik bekannten Konizität verändertem Ausgangswert, da aufgrund der stärkeren Druckeinwirkung auf den Dichtring 44 an seinem druckraumseitigen Ende (kein Gegendruck vom Nutengrund her!) die Größe des Spaltes zwischen Kolbenstange 16 und Dichtring 44 bei Druckbeaufschlagung nunmehr von seinem druckraumfernen Ende zu seinem druckraumseitigen Ende zunimmt. Dies hat zur vorteilhaften Folge, daß unterhalb des maximal zulässigen Betriebsdruckes ein kleinerer Spalt zwischen dem Dichtring und der abzudichtenden Fläche vorliegt. Während bei der aus dem Stand der Technik bekannten Anordnung der sogenannte Fertigungsspalt zwischen Dichtring und abzudichtender Fläche, also die Differenz zwischen dem Innendurchmesser des Dichtringes und dem Außendurchmesser der Kolbenstange, als Summe des Laufspaltes zwischen Dichtring und Kolbenstange (ca. 5 bis 10 µm) und der aus dem Druckunterschied resultierenden Zusammenpressung des Dichtringes zu bemessen ist, entspricht der Fertigungsspalt bei der erfindungsgemäßen Lösung nur dem minimalen Dichtspalt, so daß wesentlich weniger Öl abströmt, da die Betriebsdrükke üblicherweise unterhalb des maximal zulässigen Druckes liegen. Des weiteren verbessert der erfindungsgemäß auftretende Einströmkonus bei geeigneter Materialauswahl die hydraulischen Zentrierkräfte.

Es sei nochmals darauf hingewiesen, daß in den Figuren 3 und 4 keine tatsächlich auftretenden Druckverhältnisse gezeigt sind, sondern daß es sich um schematische und prinzipielle Darstellungen von Druckverhältnissen zum besseren Verständnis der Wirkungsweise der Erfindung handelt.

Eine Zentrierung des Dichtringes 44 erfolgt erfindungsgemäß "automatisch" bei Druckbeaufschlagung. Der zunächst insbesondere aufgrund Schwerkrafteinwirkung unzentrisch (d.h. nicht konzentrisch mit der Kolbenstange) gelagerte Dichtring wird bei Druckbeaufschlagung mit Druckmittel durch den Gleitführungsspalt 18 gegen die druckraumferne Nut-Seitenwand 40 gedrückt. Gleichzeitig dringt das Druckmittel zwischen die zylindrische Innenfläche des Dichtringes und die Außenfläche der Kolbenstange ein und verteilt sich entlang des Umfangs der Kolbenstange, wodurch eine Zentrierung des Dichtringes bewirkt wird.

Zur Vereinfachung der Zentrierung können die Reibung zwischen dem Dichtring und der druckraumfernen Nut-Seitenwand vermindernde Maßnahmen vorgesehen werden. Figur 5 zeigt in seitlicher Schnittdarstellung den Dichtring 44 der Figur 1, bei dem zwischen der druckraumfernen Nut-Seitenwand 40 und der druckraumfernen Stirnfläche 52 des Dichtringes 44 eine Zwischenscheibe 60 zur Verminderung der Haft- und Gleitreibung zwischen den beiden Flächen eingefügt ist. Bei der Zwischenscheibe 60 zur Verringerung der stirnseitigen Reibung kann es sich beispielsweise um eine Metall- oder Kunststoffscheibe handeln, die vorteilhafterweise eine reibungsvermindernde Beschichtung aufweist.

In anderer Ausgestaltung der Erfindung kann die Reibungsverminderung an der druckraumfernen Stirnfläche 52 des Dichtringes 44 durch eine hydrostatische Entlastung erfolgen, wie sie in der Figur 6 gezeigt ist. Dazu weist der Dichtring 44' einen oder mehrere Kanäle 55 auf, die axial durch den Dichtring 44' verlaufen und einen Teil des aus dem Druckraum 32 stammenden Druckmittels zwischen die druckraumferne Nut-Seitenwand 40 und die druckraumferne Stirnfläche 52 leiten. Dort verteilt sich das Druckmittel (diese Verteilung kann durch eine Vertiefung 56 unterstützt werden, die entweder an der Stirnfläche 52 oder der Nut-Seitenwand 40 ausgebildet ist) und bewirkt eine auf den Dichtring 44' wirkende Gegenkraft, die zu einer Verringerung der Anpreßkraft auf die druckraumferne Nut-Seitenwand 40 und somit zu einer Reibungsverminderung zwischen diesen Flächen führt.

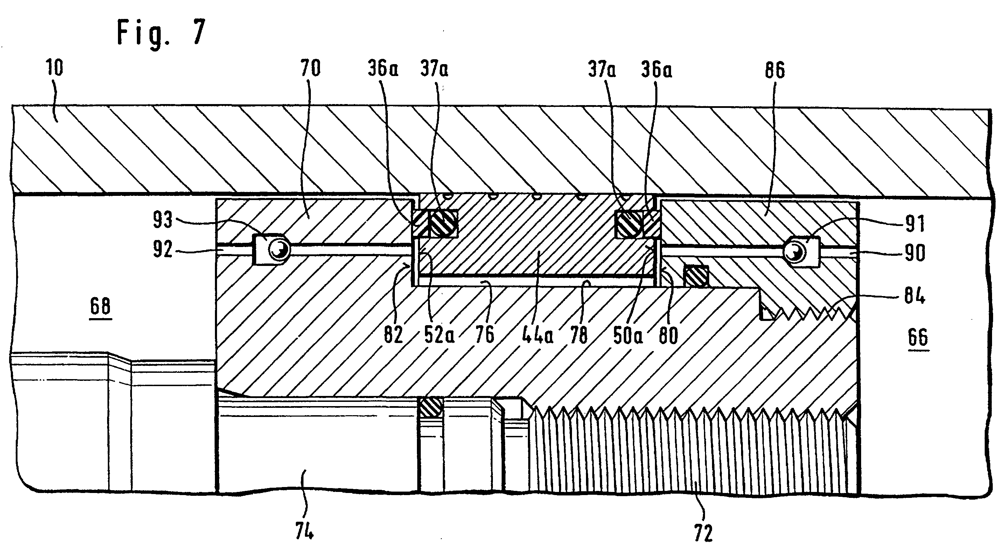

Figur 7 zeigt die Anwendung des erfindungsgemäßen Dichtprinzips bei einem Kolben 70 in einem Hydraulikzylinder 10, in dem zu beiden Seiten des Kolbens abwechselnd gleich hohe Drücke vorhanden sein können. Die Dichtung der Figur 7 hat einen symmetrischen Aufbau zu beiden Seiten der Kolbenlängsmitte, wobei im Unterschied zu der aus dem Stand der Technik bekannten Dichtung (EP 0 043 918 B1) anstatt zweier Dichtringe nur noch ein Dichtring 44a notwendig ist.

Der Kolben des in Figur 7 in schematischem Längsschnitt dargestellten Hydraulikzylinders 10 besteht aus einem auf einen Gewindeabschnitt 72 einer Kolbenstange 74 aufgeschraubten Kolbenkörper 70, der eine Ringnut 76 enthält.

Des weiteren umfaßt der Hydraulikzylinder 10 im Bereich jedes Kolbenendes jeweils einen Druckraum 66, 68.

Die Ringnut 76 weist in axialer Richtung zu den Druckräumen 66, 68 weisende Nut-Seitenwände 80, 82 auf, wobei die in der Zeichnung rechts dargestellte Nut-Seitenwand 80 durch einen auf einen Gewindeabschnitt 84 des Kolbenkörpers 70 aufgeschraubten Ringteil 86 gebildet ist. In der Ringnut 76 ist ein Dichtring 44a aus Metall oder geeignetem Material aufgenommen, der an beiden Stirnflächen 50a, 52a über Mittel zur Verhinderung einer Druckausbreitung zum Nutengrund 78 aufweist. Bei diesen Mitteln handelt es sich in dem dargestellten Ausführungsbeispiel analog den vorstehend beschriebenen Ausführungsbeispielen um jeweils ein Abdichtelement 36a aus Kunststoff (Kunststoffdichtring) und ein den Kunststoffdichtring in axialer Richtung beaufschlagendes flexibles Formteil 37a aus Gummi.

Der Kolbenkörper 70 weist des weiteren zwei im wesentlichen axial verlaufende Ablaufkanäle 90, 92 auf, die die Ringnut 76 mit den Druckräumen 66 bzw. 68 verbinden. In den Ablaufkanälen 90, 92 ist jeweils ein Ventil vorgesehen, das in Richtung der aus dem zugeordneten Druckraum stammenden Druckbeaufschlagung sperrt, so daß die Ablaufkanäle 90, 92 zur Ableitung von in den Bereich des Nutengrundes 78 der Ringnut 76 gelangten Druckmittels in den jeweils gegenüberliegenden Druckraum 66 bzw. 68 dienen.

Bei einer nicht näher dargestellten Ausgestaltung des Hydraulikzylinders, in der zu beiden Seiten des Kolbens gleich hohe Drücke gleichzeitig auftreten, ist ein im Bereich des Nutengrundes mündender Ablaufkanal vorgesehen, der die Nut mit einem im wesentlichen druckfreien Raum verbindet.

Aufgrund der geänderten Druckbeaufschlagung an dem Dichtring gestattet die Erfindung die Verwendung von Materialien mit größerem E-Modul für den Dichtring, mit positiver Auswirkung auf hydraulische Zentrierkraft und Leckage. Während bei den aus dem Stand der Technik bekannten Dichtungen auf einen möglichst geringen E-Modul (d.h. kleine Dehnung des Dichtrings) geachtet werden muß und deshalb vorzugsweise Verbundwerkstoffe, insbesondere beschichteter Stahl, Verwendung finden, können nunmehr im Rahmen der erfindungsgemäßen Dichtung aus anderen Materialien, vorzugsweise Nichteisenmetallen gefertigte Dichtringe verwendet werden.

Selbstverständlich ist die Erfindung nicht auf die in den Figuren dargestellten Ausführungsbeispiele beschränkt, sondern erfaßt auch andere konkrete Ausgestaltungen, die von dem der Erfindung zugrundeliegenden Prinzip Gebrauch machen. So kann sich beispielsweise die Ringnut 30, die sich in dem in der Figur 1 dargestellten Ausführungsbeispiel in der Führungsbuchse 12 befindet, bei anderen Ausführungsformen selbstverständlich auch in einem anders ausgeführten Bauteil untergebracht sein, das der abzudichtenden Fläche gegenüberliegt bzw. diese umgibt.

## Patentansprüche

1. Reibungsarme Dichtung mit einem Dichtring (44), der in einer Nut (30; 76) einer von zwei gegeneinander abzudichtenden und translatorisch relativ zueinander bewegten Flächen mit axialem und radialem Spiel in einem Hydraulikzylinder aufgenommen ist und der mit seiner aus der Nut (30; 76) herausragenden zylindrischen Innenfläche (46) mit Gleitsitz der anderen abzudichtenden Fläche gegenüberliegt,
**dadurch gekennzeichnet,**
**daß** zwischen der druckraumseitigen Nut-Seitenwand (34; 80, 82) und dem Dichtring (44) Mittel (36, 37) zur Verhinderung einer Druckausbreitung zum Nutengrund (38; 78) vorgesehen sind, derart, daß bei einer Beaufschlagung mit Druckmittel ein Ausbreiten des Druckmittels lediglich zwischen der zylindrischen Innenfläche (46) des Dichtrings (44) und der anderen abzudichtenden Fläche erfolgt, wobei über die Länge des Dichtrings (44) eine nahezu kontinuierliche Abnahme des Drucks erfolgt.

2. Dichtung nach Anspruch 1, **dadurch gekennzeichnet, daß** die Mittel (36, 37) zur Verhinderung einer Druckausbreitung ein zwischen Dichtring (44) und druckraumseitiger Nut-Seitenwand (34) wirksames Abdichtelement (36) umfassen.

3. Dichtung nach Anspruch 2, **dadurch gekennzeichnet, daß** die Mittel (36, 37) zur Verhinderung einer Druckausbreitung des weiteren ein das Abdichtelement (36) in axialer Richtung beaufschlagendes Formteil (37) umfassen.

4. Dichtung nach Anspruch 2 oder 3, **dadurch gekennzeichnet, daß** das Abdichtelement (36) ein Kunststoffdichtring ist, dessen Ringbreite kleiner ist als die Ringbreite des in der Nut (30) aufgenommenen Dichtrings (44) und dessen Dicke größer ist als die Breite des Spaltes (39) zwischen dem Dichtring (44) und der druckraumseitigen Nut-Seitenwand (34).

5. Dichtung nach Anspruch 3 oder 4, **dadurch gekennzeichnet, daß** das Formteil (37) ein flexibler, insbesondere elastischer Ring aus Kunststoff und/oder Gummi ist.

6. Dichtung nach einem der Ansprüche 3 bis 5, **dadurch gekennzeichnet, daß** das Formteil (37) in einer sich axial öffnenden Ringnut (35') in der Nut-Seitenwand (34) angeordnet ist und das Abdichtelement (36) gegen den Dichtring (44) drückt.

7. Dichtung nach einem der Ansprüche 3 bis 5, **dadurch gekennzeichnet, daß** das Formteil (37) in einer sich axial öffnenden Ringnut (35) in dem Dichtring (44) angeordnet ist und das Abdichtelement (36) gegen die Nut-Seitenwand (34) drückt.

8. Dichtung nach Anspruch 6 oder 7, **dadurch gekennzeichnet, daß** bei Druckbeaufschlagung eine Verformung des Formteils (37) erfolgt, derart daß sich der Anpreßdruck des Formteils (37) gegen das Abdichtelement (36) erhöht.

9. Dichtung nach einem der Ansprüche 1 bis 8, **dadurch gekennzeichnet, daß** zwischen der druckraumfernen Nut-Seitenwand (40) und dem Dichtring (44) eine reibungsvermindernde Zwischenscheibe (60) eingebracht ist.

10. Dichtung nach einem der Ansprüche 1 bis 8, **dadurch gekennzeichnet, daß** zwischen der druckraumfernen Nut-Seitenwand (40) und dem Dichtring (44) eine hydrostatische Entlastung vorgesehen ist.

11. Dichtung nach einem der Ansprüche 1 bis 8, **dadurch gekennzeichnet, daß** bei zwei beidseitig von der Nut (76) in axialer Richtung angeordneten Druckräumen (66, 68) zwischen beiden Nut-Seitenwänden (80, 82) und dem Dichtring (44a) Mittel (36a, 37a) zur Verhinderung einer Druckausbreitung zum Nutengrund (78) vorgesehen sind und daß zwischen den Mitteln (36a, 37a) zur Verhinderung einer Druckausbreitung mindestens ein Ablaufkanal (90, 92) zur Ableitung von in die Nut (76) gelangtem Druckmittel angeordnet ist.

12. Dichtung nach Anspruch 11, **dadurch gekennzeichnet, daß** der mindestens eine Ablaufkanal (90, 92) die Nut (76) mit dem Druckraum (66, 68) oder mit einem im wesentlichen druckfreien Raum verbindet.

13. Dichtung nach Anspruch 11, **dadurch gekennzeichnet, daß** druckabfallseitig hinter den Mitteln (36a, 37a) zur Verhinderung einer Druckausbreitung jeweils ein den Druckraum (66, 68) mit der Nut (76) verbindender Ablaufkanal (90, 92) vorgesehen ist, der mit einem entgegen der Ablaufrichtung von Druckmittel aus der Nut (76) in den Druckraum (66, 68) wirksamen Ventil (91, 93) beaufschlagt ist.

14. Hydraulikzylinder mit einer in einem Führungselement (12, 70) geführten Kolbenstange (16), wobei in dem Führungselement (12, 70) zur Ausbildung einer reibungsarmen Dichtung eine Nut (30, 76) vorgesehen ist, in der ein Dichtring (44) zur Leckage-Dichtung zwischen Kolbenstange (16) und Führungselement (12, 70) aufgenommen ist, wobei der Dichtring (44) mit seiner aus der Nut (30; 76) herausragenden zylindrischen Innenfläche (46) mit Gleitsitz der anderen abzudichtenden Fläche gegenüberliegt,
**dadurch gekennzeichnet,**
**daß** zwischen der druckraumseitigen Nut-Seitenwand (34; 80, 82) und dem Dichtring (44) Mittel (36, 37) zur Verhinderung einer Druckausbreitung zum Nutengrund (38; 78) vorgesehen sind, derart, daß bei einer Beaufschlagung mit Druckmittel ein Ausbreiten des Druckmittels lediglich zwischen der zylindrischen Innenfläche (46) des Dichtrings (44) und der anderen abzudichtenden Fläche erfolgt, wobei über die Länge des Dichtrings (44) eine nahezu kontinuierliche Abnahme des Drucks erfolgt.

## Claims

1. Low-friction seal, with a sealing ring (44) which is accommodated with axial and radial clearance in a groove (30; 76) in one of two surfaces in a hydraulic cylinder that need to be sealed relative to one another and that move relative to one another, and which is arranged opposite to the other surface to be sealed with its cylindrical inner surface (46) that protrudes from the groove (30; 76) namely with a sliding fit, **characterized in that** means (36, 37) for preventing a pressure propagation to the bottom (38; 78) of the groove are provided between the sidewall (34; 80, 82) of the groove on the side of the pressure chamber and the sealing ring (44), namely in such a way that, when the seal is charged with a pressure medium, a propagation of the pressure medium only takes place between the cylindrical inner surface (46) of the sealing ring (44) and the other surface to be sealed, with a nearly continuous decrease in pressure taking place over the length of the sealing ring (44).

2. Seal according to claim 1, **characterized in that** the means (36, 37) for preventing a pressure propagation contain a sealing element (36) which is effective between the sealing ring (44) and the sidewall (34) of the groove on the side of the pressure chamber.

3. Seal according to claim 2, **characterized in that** the means (36, 37) for preventing a pressure propagation also contain a formed part (37) that acts upon the sealing element (36) in the axial direction.

4. Seal according to claim 2 or 3, **characterized in that** the sealing element (36) consists of a plastic sealing ring, the ring width of which is smaller than the ring width of the sealing ring (44) accommodated in the groove (30), and the thickness of which is greater than the width of the gap (39) between the sealing ring (44) and the sidewall (34) of the groove on the side of the pressure chamber.

5. Seal according to claim 3 or 4, **characterized in that** the formed part (37) consists of a flexible ring, in particular, an elastic ring of plastic and/or rubber.

6. Seal according to one of claims 3 to 5, **characterized in that** the formed part (37) is arranged in an axially opening annular groove (35') in the sidewall (34) of the groove and presses the sealing element (36) against the sealing ring (44).

7. Seal according to one of claims 3 to 5, **characterized in** the fact that the formed part (37) is arranged in an axially opening annular groove (35) in the sealing ring (44) and presses the sealing element (36) against the sidewall (34) of the groove.

8. Seal according to claim 6 or 7, **characterized in that**, when charging the seal with pressure, the formed part (37) is deformed in such a way that the pressing force of the formed part (37) against the sealing element (36) is increased.

9. Seal according to one of claims 1 to 8, **characterized in that** a friction-reducing intermediate disk (60) is inserted between the sidewall (40) of the groove situated distant from the pressure chamber and the sealing ring (44).

10. Seal according to one of claims 1 to 8, **characterized in that** a hydrostatic alleviation is provided between the sidewall (40) of the groove situated distant from the pressure chamber and the sealing ring (44).

11. Seal according to one of claims 1 to 8, **characterized in that**, if two pressure chambers (66, 68) are axially arranged to both sides of the groove (76), means (36a, 37a) for preventing a pressure propagation to the bottom (78) of the groove are provided between both sidewalls (80, 82) of the groove and the sealing ring (44a), and by the fact that at least one drainage channel (90, 92) for diverting pressure medium that was admitted into the groove (76) is arranged between the means (36a, 37a) for preventing a pressure propagation.

12. Seal according to claim 11, **characterized in that** the at least one drainage channel (90, 92) connects the groove (76) to the pressure chamber (66, 68) or to an essentially nonpressurized space.

13. Seal according to claim 11, **characterized in that** one respective drainage channel (90, 92) which connects the pressure chamber (66, 68) to the groove (76) is provided behind the means (36a, 37a) for preventing a pressure propagation on the side of the pressure decrease, with said drainage channel containing a valve (91, 93) that acts opposite to the direction in which the pressure medium drains from the groove (76) into the pressure chamber (66, 68).

14. Hydraulic cylinder, with a piston rod (16) that is guided in a guide element (12, 70), with a groove (30, 76) being arranged in the guide element (12, 70) to form a low-friction seal, a sealing ring (44) for sealing leaks between the piston rod (16) and the guide element (12, 70) being accommodated in said groove, wherein the sealing ring (44) is arranged opposite to the other surface to be sealed with its cylindrical inner surface (46) that protrudes from the groove (30; 76) namely with a sliding fit, **characterized in that** means (36, 37) for preventing a pressure propagation to the bottom (38; 78) of the groove are provided between the sidewall (34; 80; 82) of the groove on the side of the pressure chamber and the sealing ring (44), namely in such a way that, when the seal is charged with a pressure medium, a propagation of the pressure medium only takes place between the cylindrical inner surface (46) of the sealing ring (44) and the other surface to be sealed, with a nearly continuous decrease in pressure taking place over the length of the sealing ring (44).

## Revendications

1. Joint à faible friction, comprenant une bague d'étanchéité (44) reçue avec jeu axial et radial dans une gorge (30; 76) ménagée dans une surface parmi deux surfaces mobiles l'une par rapport à l'autre dans un cylindre hydraulique et qu'il s'agit d'étancher l'une vis-à-vis de l'autre, et dont la surface intérieure cylindrique sortant hors de la gorge (30; 76) est opposée à l'autre surface à étancher, et en contact coulissant **caractérisé en ce qu'**il est prévu des moyens (36, 37) entre la paroi latérale (34 ; 80, 82) de la gorge du côté de la chambre à pression et la bague d'étanchement (44) pour empêcher une propagation de la pression vers le fond (38 ; 78) de la gorge, de telle sorte que lors d'une pressurisation avec un fluide sous pression, une propagation du fluide sous pression se produit uniquement entre la surface intérieure cylindrique (46) de la bague d'étanchéité (44) et l'autre surface à étancher, et de sorte qu'il se produise une diminution pratiquement continue de la pression sur la longueur de la bague d'étanchéité (44).

2. Joint selon la revendication 1, **caractérisé en ce que** les moyens (36, 37) pour empêcher une propagation de la pression comprennent un élément d'étanchement (36) agissant entre la bague d'étanchéité (44) et la paroi latérale (34) de la gorge du côté de la chambre à pression.

3. Joint selon la revendication 2, **caractérisé en ce que** les moyens (36, 37) pour empêcher une propagation de la pression comprennent en outre une pièce conformée (37) qui est en contact avec l'élément d'étanchement (36) en direction axiale.

4. Joint selon l'une ou l'autre des revendications 2 et 3, **caractérisé en ce que** l'élément d'étanchement (36) est une bague d'étanchement en matière plastique dont la largeur annulaire est plus petite que la largeur annulaire de la bague d'étanchéité (44) reçue dans la gorge (30) et dont l'épaisseur et supérieure à la largeur de la fente (39) entre la bague d'étanchéité (44) et la paroi latérale de la gorge (34) du côté de la chambre à pression.

5. Joint selon l'une ou l'autre des revendications 3 et 4, **caractérisé en ce que** la pièce conformée (37) est une bague souple, en particulier élastique, en matière plastique et/ou en caoutchouc.

6. Joint selon l'une des revendications 3 à 5, **caractérisé en ce que** la pièce conformée (37) est agencée dans une rainure annulaire (35') qui s'ouvre axialement dans la paroi latérale (34) de la gorge, et **en ce que** l'élément d'étanchement (36) pousse contre la bague d'étanchéité (44).

7. Joint selon l'une des revendications 3 à 5, **caractérisé en ce que** la pièce conformée (37) est agencée dans la bague d'étanchéité (44) dans une rainure annulaire (35) qui s'ouvre axialement, et ce que l'élément d'étanchement (36) pousse contre la paroi latérale (34) de la gorge.

8. Joint selon l'une ou l'autre des revendications 6 et 7, **caractérisé en ce que** lors de l'application d'une pression se produit une déformation de la pièce conformée (37) de manière que la pression d'appui de la pièce conformée (37) contre l'élément d'étanchement (37) augmente.

9. Joint selon l'une des revendications 1 à 8, **caractérisé en ce qu'**une rondelle intermédiaire (60) de réduction de friction est introduite entre la paroi latérale (40) de la gorge détournée de la chambre à pression et la bague d'étanchéité (44).

10. Joint selon l'une des revendications 1 à 8, **caractérisé en ce qu'**il est prévu un moyen de décharge hydrostatique entre la paroi latérale (40) de la gorge détournée de la chambre à pression et la bague d'étanchéité (44).

11. Joint selon l'une des revendications 1 à 8, **caractérisé en ce que**, lorsqu'il existe deux chambres à pression (66, 68) agencées des deux côtés de la gorge (76) en direction axiale, il est prévu entre les deux parois latérales (80, 82) de la gorge et la bague d'étanchéité (44a) des moyens (36a, 37a) pour empêcher une propagation de la pression vers le fond (78) de la gorge, et **en ce qu'**entre les moyens (36a, 37a) pour empêcher une propagation de pression est ménagé au moins un canal d'évacuation (90, 92) pour évacuer le fluide sous pression parvenu dans la gorge (76).

12. Joint selon la revendication 11, **caractérisé en ce que** ledit au moins un canal d'évacuation (80, 92) relie la gorge (76) avec la chambre à pression (66, 68) ou avec un espace sensiblement sans pression.

13. Joint selon la revendication 11, **caractérisé en ce qu'**il est prévu, derrière les moyens (36a, 37a) pour empêcher une propagation de pression, sur le côté à pression réduite, un canal d'évacuation (90, 92) respectif qui relie la chambre à pression (66, 68) avec la gorge (76) et qui est alimenté au moyen d'une valve (91, 93) agissant à l'encontre de l'écoulement du fluide sous pression en direction hors de la gorge (76) dans la chambre à pression (66, 68).

14. Cylindre hydraulique comprenant une tige de piston (16) guidée dans un élément de guidage (12, 70), de sorte qu'il est prévu dans l'élément de guidage (12, 70), en vue de réaliser un joint à faible friction, une gorge (30, 76) dans laquelle est reçue une bague d'étanchéité (44) afin d'assurer un étanchement vis-à-vis des fuites entre la tige de piston (16) et l'élément de guidage (12, 70), tel que la bague d'étanchéité (44) est située, de par sa surface intérieure cylindrique (46) sortant hors de la gorge (30; 76), opposée à l'autre surface à étancher et en contact coulissant, **caractérisé en ce qu'**il est prévu des moyens (36, 37) entre la paroi latérale (34; 80, 82) de la gorge du côté de la chambre à pression et de la bague d'étanchement (44) pour empêcher une propagation de la pression vers le fond (38; 78) de la gorge, de telle sorte que lors d'une pressurisation avec un fluide sous pression, une propagation du fluide sous pression se produit uniquement entre la surface intérieure cylindrique (46) de la bague d'étanchéité (44) et l'autre surface à étancher, et de sorte qu'il se produise une diminution pratiquement continue de la pression sur la longueur de la bague d'étanchéité (44).
